# EUROPEAN PATENT APPLICATION

(11) **EP 4 303 377 A1**
(43) Date of publication of application: **10.01.2024**
(21) Application number: 22183514.3
(22) Date of filing: 07.07.2022
(51) Int. Cl.: E04D 13/08, B33Y 80/00

(54) **A METHOD FOR PRODUCING A ROOF DRAIN ELEMENT**

(71) Applicant: Sika Technology AG, 6340 Baar (CH)
(72) Inventor: MICHEL, Adrian, 6064 Kerns (CH); NÄF, Armin, 6023 Rothenburg (CH); HÜBSCHER, Peter, 6012 Obernau (CH); HUEPPI, Patrick, 6063 Stalden (CH); Z'ROTZ, Roy, 6030 Ebikon (CH)
(74) Representative: Sika Patent Attorneys

(57) **Abstract**

The invention relates to a method for producing a roof drain element comprising steps of:
i) Providing a digital model of a roof drain element (1) and
ii) Based on the digital model, producing a roof drain element (1) by additive manufacturing,
wherein the roof drain element (1) comprises a baseplate (2) having upper and lower major surfaces (21, 22) and at least one hollow tubular section (3) extending outwardly from the upper major surface (21) of the baseplate (2),
and wherein step ii) comprises:
ii1) Providing a baseplate (2) and
ii2) Producing tubular section(s) (3) to the upper major surface (21) of the baseplate (2) by using a 3D printer, preferably a fused filament fabrication or a fused particle fabrication printer.

## Description

### Technical field

The invention relates to roof drain elements that are used for sealing of rainwater outlets in flat roof structures. Particularly, the invention relates to a method for producing roof drains and overflows by using additive manufacturing means.

### Background art

In the field of waterproofing of above ground constructions, various accessories and detailing parts are used for sealing of penetrations that are, for example, required for installation of pipes, electrical cables, and rainwater outlets. Especially flat roofs need a proper drainage system to avoid excessive flooding in case of rain. Rainwater outlets situated in the horizontal level of the roof und running in vertical direction are sealed with roof drains whereas roof overflows are used for sealing of rainwater outlets that run horizontally through parapets.

Roof drains and overflows are complex tree-dimensional articles that are provided as prefabricated detailing parts with various sizes and/or colors. Production of these by injection molding is generally not efficient, mainly due to the small lot sizes of order of 10 to 100 for each type of detailing part. Furthermore, the detailing parts must be heat weldable to the roofing membrane and they have to provide the same performance regarding weathering as the roofing membrane, which basically prevents providing these parts as a standardized solution.

Consequently, the roof drains and overflows are manufactured by hand from die-cut polymeric plates. For polyvinylchloride (PVC) roofs, the material of the plate is unplasticized PVC-u, while for thermoplastic polyolefin (TPO) roofs, polypropylene plates are used.

Typically, the base plate and other parts of the roof drain/overflow are provided by die-cutting and then connected to each other by "extrusion welding", which is a combination of heat welding with application of a bead of polymer melt. The use of extrusion welding is necessary since otherwise the stiff die-cut parts could not be connected to form a fully watertight object. However, the local heating conducted during the extrusion welding produces considerable strains in the material, which might lead to warping or even cracking and eventual loss of watertightness of the produced detailing part. The handmade roof drains and overflows are also very sensitive to impacts and can easily be damaged by dropping.

It would therefore be highly desirable to have an efficient method for producing customized roof drain elements in terms of shape and color, which method avoids the use of thermal extrusion and consequent thermal stresses.

### Brief description of figures

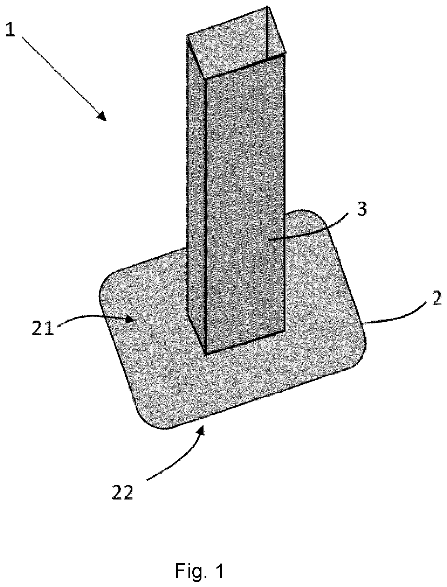

Fig. 1 shows a roof drain element (1) comprising a baseplate (2) having upper and lower major surfaces (21, 22) and a hollow tubular section (3) extending outwardly from the upper major surface (21) of the baseplate (2).
Fig. 2 shows a roof drain element (1) comprising a baseplate (2) having upper and lower major surfaces (21, 22) and two hollow tubular sections (31, 32) extending outwardly from the upper major surface (21) of the baseplate (2).
Fig. 3 and Fig. 4 show photographic presentation of a roof drain element during and after a 3D printing process.

In the figures, the same components are given the same reference symbols.

### Disclosure of the invention

It is an object of the present invention to provide a method for producing customized roof drain elements for use in sealing of rainwater outlets in flat roofs.

Surprisingly, it has been found out that the object can be achieved by the features of claim 1.

Especially, it has been found out that customized roof drain elements having complex three-dimensional shapes can be efficiently produced by means of additive manufacturing using a 3D printer. The inventive method avoids the use of thermal extrusion, and the roof detailing parts are, therefore, not subjected to thermal stresses during their production. The risk of material failure while using such detailing parts is thus significantly lower compared to using handcrafted parts of prior art.

One of advantages of the method of the present invention is that the production of the roof drain elements by an additive manufacturing process allows producing single individualized items at very low costs. Specifically, the costs per part are essentially independent of the lot size. Also, it can be ensured that the roof drain elements provide the same quality as that of the roofing membranes, which are generally used for waterproofing of roof structures.

Further subjects of the present invention are defined in further independent claims. Preferred embodiments are outlined throughout the description and the dependent claims.

### Detailed description

The subject of the present invention is a method for producing a roof drain element comprising steps of:
i) Providing a digital model of a roof drain element (1) and
ii) Based on the digital model, producing a roof drain element (1) by additive manufacturing,
wherein the roof drain element (1) comprises a baseplate (2) having upper and lower major surfaces (21, 22) and at least one hollow tubular section (3) extending outwardly from the upper major surface (21) of the baseplate (2),
and wherein step ii) comprises:
ii1) Providing a baseplate (2) and
ii2) Producing tubular section(s) (3) to the upper major surface (21) of the baseplate (2) by using a 3D printer, preferably a fused filament fabrication or a fused particle fabrication printer.

The abbreviation 3D is used throughout the present disclosure for the term "three-dimensional.

The term "polymer" refers to a collective of chemically uniform macromolecules produced by a polyreaction (polymerization, polyaddition, polycondensation) of monomers of same of different type where the macromolecules differ with respect to their degree of polymerization, molecular weight, and chain length. The term also encompasses derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "melting temperature" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one polymer P" refers to the sum of the individual amounts of all polymers P contained in the composition. Furthermore, in case the composition comprises 20 wt.-% of at least one polymer P, the sum of the amounts of all polymers P contained in the composition equals 20 wt.-%.

According to ISO 52900-2015 standard, the term "additive manufacturing (AM)" refers to technologies that use successive layers of material to create 3D objects. In an AM process, the material is deposited, applied, or solidified under computer control based on a digital model of the 3D object to be produced, to create the 3D article.

Additive manufacturing processes are also referred to using terms such as "generative manufacturing methods" or "3D printing". The term "3D printing" was originally used for an ink jet printing based AM process created by Massachusetts Institute of Technology (MIT) during the 1990s. Compared to conventional technologies, which are based on object creation through either molding/casting or subtracting/machining material from a raw object, additive manufacturing technologies follow a fundamentally different approach for manufacturing. Particularly, it is possible to change the design for each object, without increasing the manufacturing costs, offering tailor made solutions for a broad range of products.

Generally, in an AM process a 3D article is manufactured using a shapeless material (e.g. liquids, powders, granules, pastes, etc.) and/or a shape-neutral material (e.g. bands, wires, filaments) that in particular is subjected to chemical and/or physical processes (e.g. melting, polymerization, sintering, curing or hardening). The main categories of AM technologies include VAT photopolymerization, material extrusion, material jetting, binder jetting, powder bed fusion, direct energy deposition, and sheet lamination techniques.

According to the invention, the at least one hollow tubular section is produced, i.e., printed, to the upper major surface of the baseplate by using a fused filament fabrication or a fused particle fabrication 3D printer.

In a fused filament fabrication (FFF) printing, also known as fused deposition modeling (FDM) printing, a 3D article is produced based on a digital model of the 3D article using a polymeric material in form of a filament. A "digital model" refers to a digital representation of a real world object, for example of a sealing element, that exactly replicates the shape of the object. A digital model can be created, for example, by using a CAD software or a 3D object scanner. Typically, the digital model is stored in a computer readable data storage, especially in a data file. The data file format can, for example, be a computer-aided design (CAD) file format or a G-code (also called RS-274) file format.

Fused particle fabrication (FPF) printing, also known as fused granular fabrication (FGF) printing, differs from FFF printing only in that the polymeric material is provided in form of particles, such as granules or pellets, instead of a filament.

In FFF and FPF printing, a polymer filament/particle is fed into a moving printer extrusion head, heated past its glass transition or melting temperature, and then deposited through a heated nozzle of the printer extrusion head as series of layers in a continuous manner. After the deposition, the layer of polymeric material solidifies and fuses with the already deposited layers.

The printer extrusion head is moved under computer control to define the printed shape based on control data calculated from the digital model of the 3D article. Typically, the digital model of the 3D article is first converted to a STL file to tessellate the 3D shape and to slice it into digital layers. The STL file is then transferred to the 3D printer using custom machine software. A control system, such as a computer-aided manufacturing (CAM) software package, is used to transform the STL file into control data, which is used for controlling the printing process. Usually, the printer extrusion head moves in two dimensions to deposit one horizontal plane, or layer, at a time. The formed object and/or the printer extrusion head is then moved vertically by a small amount to start deposition of a new layer.

The baseplate provided in step ii1) of the method is preferably a sheet-like element having a width, length, and thickness defined between the upper and lower major surfaces.

Preferably, the base plate and the at least one hollow tubular sections are composed of polymeric materials that are heat-weldable with each other. By the expression "heat-weldable" is understood to mean that articles composed of the polymeric materials can be joined to each other by heat-welding to achieve a sufficient interlayer peel strength.

According to one or more embodiments, the baseplate is an injection molded, a compression molded, or a die-cut part, preferably a die-cut part.

The dimensions of the baseplate are not particularly restricted in terms of length, width, and thickness and these depend mainly only on the application requirements.

According to one or more embodiments, the baseplate has:
- a surface area of 0.05 - 0.25 m², preferably 0.1 - 0.2 m² and/or
- a thickness of 0.5 - 10 mm, preferably 2.5 - 7.5 mm.

The baseplate can have any conventional shape, such as a circular, square, hexagonal, rectangular, polygonal, parallelogram, rhomboidal, or an oval shape. According to one or more preferred embodiments, the baseplate has a circular or rectangular shape.

In a preferred embodiment, the baseplate has a shape and size of a DIN A2, DIN A3, or DIN A4 sheet.

The at least one hollow tubular section preferably has first and second end openings, inner and outer surfaces, and a fluid channel extending along the longitudinal direction of the hollow tubular section. The term "hollow" is understood to mean in the context of the present invention that the tubular section encloses a cavity, i.e., the fluid channel. The first end opening is situated at the end of the hollow tubular section that is closest to baseplate whereas the second end opening is situated at the opposite end of the hollow tubular section.

The fluid channel of each hollow tubular section preferably extends though the baseplate. In other words, the baseplate contains an opening for each hollow tubular section, wherein the first end opening of the hollow tubular section coincides with the opening of the baseplate.

The cross-section of the at least one hollow tubular section can have any conventional shape, for example, circular, square, hexagonal, rectangular, polygonal, parallelogram, rhomboidal, or oval shape.

According to one or more preferred embodiments, the at least one hollow tubular section has a circular or rectangular cross-section.

In case of more than one hollow tubular element, rectangular shapes are generally preferred.

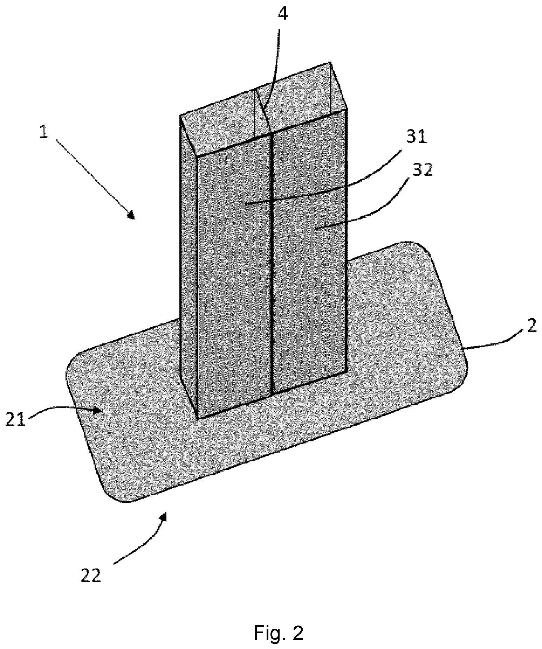

According to one or more embodiments, the roof drain element comprises at least two hollow tubular sections having a rectangular cross-section, wherein the adjacent hollow tubular sections are connected to each other through a common side wall. The expression "connected though a common side wall" is understood to mean that two hollow tubular sections having a rectangular cross-section share one of their four side walls as a common side wall. An example of roof drain element according to these embodiments is shown on right side of Figure 2.

According to one or more embodiments, the roof drain element comprises at least three hollow tubular sections preferably having a rectangular cross-section, wherein the adjacent hollow tubular sections are connected to each other through a common side wall.

The dimensions of the at least one hollow tubular section are not particularly restricted in terms of length and wall thickness, and these depend mainly only on the application requirements. The term "wall thickness" refers here to the thickness defined between the inner and outer surfaces of the hollow tubular element.

According to one or more embodiments, the at least one hollow tubular element has:
- a length of 10 - 100 cm, preferably 20 - 75 cm and/or
- a wall thickness of 0.25 - 10 mm, preferably 1.5 - 7.5 mm.

According to one or more embodiments, the inner surface of the at least one hollow tubular element has a grid structure. Such grid structure may be useful for preventing leaves and other debris accumulated on the roof from passing through the rainwater outlet.

The baseplate and the at least one hollow tubular section are preferably composed of a polymeric material comprising at least one polymer **P.**

The composition of the polymeric material depends mainly on the type of the substrate to be sealed with the roof drain element. For example, in case the rainwater outlet to be sealed runs through a roofing membrane composed of polyvinylchloride (PVC), the main polymer component of the polymeric material is preferably PVC to ensure that the baseplate can be fastened to the roofing membrane by heat-welding.

Furthermore, the polymeric material should be suitable for use in 3D printing. In practice this means, that the article produced with 3D printing from the polymeric material should show minimum amount of shrinkage and number of defects.

According to one or more embodiments, the baseplate and/or the at least one hollow tubular section is/are composed of a polymeric material comprising:
a) At least 35 wt.-%, preferably at least 45 wt.-%, of at least one polymer **P,** preferably selected from polyvinylchloride, polyolefins, halogenated polyolefin, ethylene vinyl acetate copolymer, rubbers, and ketone ethyl esters and
b) At least 0.5 wt.-%, preferable at least 1.5 wt.-%, of at least one inorganic filler **F,** all proportions being based on the total weight of the polymeric material.

Term "polyolefin" refers in the present disclosure to homopolymers and copolymers obtained by (co)polymerization of olefin monomers.

According to one or more embodiments, the polymeric material comprises 35 - 95 wt.-%, preferably 40 - 90 wt.-%, more preferably 45 - 85 wt.-%, even more preferably 50 - 80 wt.-%, based on the total weight of the polymeric material, of the at least one polymer P.

According to one or more preferred embodiments, the at least one polymer P is selected from polyvinylchloride, polypropylene, propylene copolymers, ethylene propylene diene monomer, and ketone ethyl ester.

The term "copolymer" refers in the present disclosure to a polymer derived from more than one species of monomer ("structural unit"). The polymerization of monomers into copolymers is called copolymerization. Copolymers obtained by copolymerization of two monomer species are known as bipolymers and those obtained from three and four monomer species are called terpolymers and quaterpolymers, respectively.

Suitable polypropylenes for use as the at least one polymer P include, for example, isotactic polypropylene (iPP), syndiotactic polypropylene (sPP), and homopolymer polypropylene (hPP), preferably having a melting temperature (Tₘ) determined by differential scanning calorimetry (DSC) according to ISO 11357-3:2018 standard using a heating rate of 2 °C/min of at or above 100 °C, preferably at or above 105 °C, more preferably at or above 110 °C.

Suitable propylene copolymers for use as the at least one polymer **P** include propylene-ethylene random and block copolymers and random and block copolymers of propylene and one or more C₄-C₂₀ α-olefin monomers, in particular one or more of 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of propylene-derived units, based on the weight of the copolymer.

Suitable propylene random and block copolymers are commercially available, for example, under the trade names of Intune^{®} and Versify (from Dow Chemical Company) and under the trade name of Vistamaxx^{®} (from Exxon Mobil).

Further suitable propylene copolymers for use as the at least one polymer **P** include heterophasic propylene copolymers. These are heterophasic polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Suitable commercially available heterophasic propylene copolymers include reactor blends of the base polyolefin and the polyolefin modifier, also known as "in-situ TPOs" or "reactor TPOs or "impact copolymers (ICP)", which are typically produced in a sequential polymerization process, wherein the components of the matrix phase are produced in a first reactor and transferred to a second reactor, where the components of the dispersed phase are produced and incorporated as domains in the matrix phase. Heterophasic propylene copolymers comprising polypropylene homopolymer as the base polymer are often referred to as "heterophasic propylene copolymers (HECO)" whereas heterophasic propylene copolymers comprising polypropylene random copolymer as the base polymer are often referred to as "heterophasic propylene random copolymers (RAHECO)". The term "heterophasic propylene copolymer" encompasses in the present disclosure both the HECO and RAHECO types of the heterophasic propylene copolymers.

Depending on the amount of the polyolefin modifier, the commercially available heterophasic propylene copolymers are typically characterized as "impact copolymers" (ICP) or as "reactor-TPOs" or as "soft-TPOs". The main difference between these types of heterophasic propylene copolymers is that the amount of the polyolefin modifier is typically lower in ICPs than in reactor-TPOs and soft-TPOs, such as not more than 40 wt.-%, particularly not more than 35 wt.-%. Consequently, typical ICPs tend to have a lower xylene cold soluble (XCS) content determined according to ISO 16152 2005 standard as well as higher flexural modulus determined according to ISO 178:2010 standard compared to reactor-TPOs and soft-TPOs.

Suitable heterophasic propylene copolymers include reactor TPOs and soft TPOs produced with LyondellBasell's Catalloy process technology, which are commercially available under the trade names of Adflex^{®}, Adsyl^{®}, Clyrell^{®}, Hifax^{®}, Hiflex^{®}, and Softell^{®}, such as Hifax^{®} CA 10A, Hifax^{®} CA 12A, and Hifax^{®} CA 60 A, and Hifax CA 212 A. Further suitable heterophasic propylene copolymers are commercially available under the trade name of Borsoft^{®} (from Borealis Polymers), such as Borsoft^{®} SD233 CF.

According to one or more preferred embodiments, the at least one polymer **P** is selected from polyvinylchloride, polypropylene, and propylene copolymers.

According to one or more embodiments, the at least one polymer **P** comprises:
- at least one propylene polymer **P1** having a flexural modulus determined according to ISO 178:2019 standard of at least 150 MPa, preferably at least 250 MPa, and
- at least one propylene-based elastomer **P2** having a flexural modulus determined according to ISO 178:2019 standard of not more than 100 MPa, preferably not more than 75 MPa.

Generally, the expression "the at least one compound X comprises at least one compound XN", such as "the at least one polymer **P** comprises at least one propylene polymer **P1**" is understood to mean in the context of the present disclosure that the polymeric material comprises one or more propylene polymers **P1** as representatives of the at least one polymer **P**.

According to one or more embodiments, the at least one propylene polymer **P1** has:
- a melting temperature (Tₘ) determined by differential scanning calorimetry (DSC) according to ISO 11357-3:2018 standard using a heating rate of 2 °C/min of at or above 105 °C, preferably at or above 110 °C, more preferably at or above 115°C and/or
- a xylene cold soluble fraction determined according to ISO 16152 2005 standard of not more than 60 wt.-%, preferably not more than 50 wt.-%.

According to one or more embodiments, the at least one propylene polymer **P** is a propylene copolymer, preferably having a propylene content of at least 25 wt.-%, more preferably at least 35 wt.-%, even more preferably at least 45 wt.-%, based on the weight of the propylene copolymer. The monomer/comonomer content of an copolymer refers to the total amount of the respective monomer/comonomer given in wt.-% or mol-%. The monomer/comonomer content can be determined by IR spectroscopy or by quantitative nuclear-magnetic resonance (NMR) measurements.

Especially suitable propylene copolymers include, for example, propylene-α-olefin bi- and terpolymers and heterophasic propylene copolymers.

Especially suitable propylene-α-olefin copolymers are commercially available, for example, under the trade name of Eltex^{®} (from Ineos), such as Eltex^{®} P KS 359; under the trade name of Propilco^{®} (from Propilco), such as Propilco^{®} 07R87; under the trade name of PPR^{®} (from Total), such as PPR^{®} 6290; under the trade name of Moplen^{®} (from LyondellBasell), such as Moplen^{®} PR 310 M, Moplen^{®} PR 320 M, and Moplen^{®} PR 220 M; and under the trade name of Clyrell^{®} (from LyondellBasell), such as Clyrell^{®} RC2472.

According to one or more embodiments, the at least one propylene-based elastomer **P2** has
- a melting temperature (Tₘ) determined by differential scanning calorimetry (DSC) according to ISO 11357-3:2018 standard using a heating rate of 2 °C/min of at or below 95 °C, preferably at or below 90 °C, more preferably at or below 85 °C and/or
- a xylene cold soluble content determined according to ISO 16152:2005 standard of at least 90 wt.-%, preferably at least 95 wt.-%, more preferably at least 97.5 wt.-%.

According to one or more embodiments, the at least one propylene-based elastomer **P2** is a propylene-ethylene copolymer having a propylene content of at least 60 wt.-%, preferably at least 70 wt.-%, based on the weight of the copolymer and an ethylene content of 5 - 20 wt.-%, preferably 12 - 18 wt.-%, based on the weight of the copolymer.

Particularly suitable propylene-based elastomers are commercially available, for example, under the trade name of Versify^{®} (from Dow Chemicals) and under the trade name of Vistamaxx^{®} (from Exxon Mobil), such as Vistamaxx^{®} 6102 and 6102.

According to one or more embodiments, the at least one polymer **P** comprises
- 5 - 70 wt.-%, preferably 10 - 65 wt.-%, more preferably 15 - 65 wt.-%, even more preferably 20 - 60 wt.-%, still more preferably 25 - 60 wt.-%, of the at least one polymer **P1** and/or
- 5 - 75 wt.-%, preferably 10 - 70 wt.-%, more preferably 15 - 65 wt.-%, even more preferably 20 - 65 wt.-%, of the at least one polymer **P2,** all proportions being based on the total weight of the at least one polymer **P**.

The polymeric material further comprises:
b) At least 0.5 wt.-%, preferable at least 1.5 wt.-%, based on the total weight of the polymeric material, of at least one inorganic filler **F**.

Suitable compounds for use as the at least one inorganic filler **F** include, for example, mineral fillers, such as sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

Preferably, the at least one inorganic filler **F** has a water-solubility of less than 0.1 g/100 g water, more preferably less than 0.05 g/100 g water, even more preferably less than 0.01 g/100 g water, at a temperature of 20 °C. The solubility of a compound in water can be measured as the saturation concentration, where adding more compound does not increase the concentration of the solution, i.e., where the excess amount of the substance begins to precipitate. The measurement for water-solubility of a compound in water can be conducted using the standard "shake flask" method as defined in the OECD test guideline 105 (adopted 27^{th} July, 1995).

According to one or more embodiments, the at least one inorganic filler **F** has a median particle size dso of not more than 150 µm, preferably not more than 100 µm, more preferably not more than 50 µm, even more preferably not more than 35 µm.

The term "particle size" refers in the present disclosure to the area-equivalent spherical diameter of a particle (Xₐᵣₑₐ). The term "median particle size dso" refers in the present disclosure to a particle size below which 50% of all particles by volume are smaller than the dso value. The particle size distribution can be determined by sieve analysis according to the method as described in ASTM C136/C136M -2014 standard ("Standard Test Method for Sieve Analysis of Fine and Coarse Aggregates).

According to one or more embodiments, the at least one inorganic filler **F** has a median particle size dso in the range of 0.1 - 50 µm, preferably 0.25 - 35 µm, more preferably 0.5 - 25 µm, even more preferably 1 - 15 µm.

According to one or more embodiments, the at least one inorganic filler **F** is selected from the group consisting of sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites, preferably from the group consisting of calcium carbonate, magnesium carbonate, clay, expanded clay, diatomaceous earth, pumice, mica, kaolin, talc, dolomite, xonotlite, perlite, vermiculite, Wollastonite, barite, calcium hydroxide, calcium aluminates, silica, fumed silica, and fused silica.

According to one or more embodiments, the at least one inorganic filler **F** comprises calcium carbonate, wherein the amount of the calcium carbonate preferably constitutes at least at least 15 wt.-%, preferably at least 35 wt.-%, more preferably at least 50 wt.-%, even more preferably at least 75 wt.-%, still more preferably at least 85 wt.-%, of the total weight of the at least one inorganic filler **F**.

The polymeric material may further comprise one of more additives, such as reinforcing fibers, flame retardants, or color pigments.

According to one or more embodiments, the polymeric material further comprises at least one reinforcing fiber material **RF,** preferably selected from milled glass fibers, aramid fibers, wollastonite fibers, and carbon fibers.

Suitable reinforcing fibers have an average fiber length in the range of 100 - 500 µm, preferably 150 - 350 µm and/or an average fiber diameter in the range of 5 - 50 µm, preferably 10 - 35 µm. The term "average fiber length/diameter" refers to the arithmetic average of the individual lengths/diameters of the fibers within a sample or collection or a statistically significant and representative random sample drawn from such a sample or collection. The term "fiber diameter" refers in the present disclosure to the equivalent diameter of the fiber determined according to EN 14889-2:2006 standard.

The fiber length and diameter may be determined by using dynamic image analysis method conducted according to ISO 13322-2:2006 standard, for example, with a dry dispersion method, where the particles are dispersed in air, preferably by using air pressure dispersion method. The measurements can be conducted using any type of dynamic image analysis apparatus, such as a Camsizer XT device (trademark of Retsch Technology GmbH).

According to one or more embodiments, the polymeric material further comprises at least one flame retardant **FR,** preferably selected from the group consisting of magnesium hydroxide, aluminum trihydroxide, antimony trioxide, ammonium polyphosphate, and melamine-, melamine resin-, melamine derivative-, melamine-formaldehyde-, silane-, siloxane-, and polystyrene-coated ammonium polyphosphates.

Further suitable flame retardants for use as the at least one flame retardant include, for example, 1,3,5-triazine compounds, such as melamine, melam, melem, melon, ammeline, ammelide, 2-ureidomelamine, acetoguanamine, benzoguanamine, diaminophenyltriazine, melamine salts and adducts, melamine cyanurate, melamine borate, melamine orthophosphate, melamine pyrophosphate, dimelamine pyrophosphate and melamine polyphosphate, oligomeric and polymeric 1,3,5-triazine compounds and polyphosphates of 1,3,5-triazine compounds, guanine, piperazine phosphate, piperazine polyphosphate, ethylene diamine phosphate, pentaerythritol, borophosphate, 1,3,5-trihydroxyethylisocyanaurate, 1,3,5-triglycidylisocyanaurate, triallylisocyanurate and derivatives of the aforementioned compounds.

Suitable flame retardants are commercially available, for example, under the trade names of Martinal^{®} and Magnifin^{®} (both from Albemarle) and under the trade names of Exolit^{®} (from Clariant), Phos-Check^{®} (from Phos-Check) and FR CROS^{®} (from Budenheim).

According to one or more embodiments, the at least one flame retardant **FR,** if used, is present in the polymeric material in an amount of 1 - 60 wt.-%, preferably 1.5 - 50 wt.-%, 5 - 40 wt.-%, more preferably 10 - 35 wt.-%, even more preferably 15 - 35 wt.-%, based on the total weight of the polymeric material.

According to one or more embodiments, the polymeric material further comprises at least one color pigment **CP**, preferably selected from the group consisting of titanium dioxide, zinc oxide, zinc sulfide, barium sulphate, iron oxide, mixed metal iron oxide, aluminium powder, and graphite.

Preferably, the at least one color pigment **CP** has a has a median particle size dso of not more than 1000 nm, more preferably not more than 750 nm, even more preferably not more than 500 nm. According to one or more embodiments, the at least one color pigment **CP** has a has a median particle size dso in the range of 50 - 1000 nm, preferably 75 - 750 nm, more preferably 100 - 650 nm, even more preferably 125 - 500 µm, still more preferably 150 - 350 nm, most preferably 200 - 300 nm.

According to one or more embodiments, the at least one color pigment **CP**, if used, is present in the polymeric material in an amount of 0.1 - 15 wt.-%, preferably 0.5 - 12.5 wt.-%, 1 - 10 wt.-%, more preferably 1.5 - 7.5 wt.-%, based on the total weight of the polymeric material.

The polymeric material may further comprise one or more UV-stabilizers, preferably at least one hindered amine light stabilizer (HALS). These types of compounds are typically added to polymer blends to prevent light-induced polymer degradation.

Suitable hindered amine light stabilizers (HALS) include, for example, bis (2,2,6,6-tetramethylpiperidyl)-sebacate; bis-5(1,2,2,6,6-pentamethylpiperidyl)-sebacate; n-butyl-3,5-di-tert-butyl-4-hydroxybenzyl malonic acid bis(1,2,2,6,6,-pentamethylpiperidyl)ester; condensation product of 1-hydroxyethyl-2,2,6,6-tetramethyl-4-hydroxy-piperidine and succinic acid; condensation product of N,N'-(2,2,6,6-tetramethylpiperidyl)-hexamethylenediamine and 4-tert-octylamino-2,6-dichloro-1,3,5-s-triazine; tris-(2,2,6,6-tetramethylpiperidyl)-nitrilotriacetate; tetrakis-(2,2,6,6-tetramethyl-4-piperidyl)-1,2,3,4-butane-tetra-arbonic acid; and 1,1'(1,2-ethanediyl)-bis-(3,3,5,5-tetramethylpiperazinone).

Suitable hindered amine light stabilizers are commercially available, for example, under the trade name of Tinuvin^{®} (from Ciba Specialty Chemicals), such as Tinuvin^{®} 371, Tinuvin^{®} 622, and Tinuvin^{®} 770; under the trade name of Chimassorb^{®} (from Ciba Specialty Chemicals) , such as Chimassorb^{®} 119, Chimassorb^{®} 944, Chimassorb^{®} 2020; and under the trade name of Cyasorb^{®} (from Cytec Industries), such as Cyasorb^{®} UV 3346, Cyasorb^{®} UV 3529, Cyasorb^{®} UV 4801, and Cyasorb^{®} UV 4802; and under the trade name of Hostavin^{®} (from Clariant), such as Hostavin N30.

The polymeric material may further comprise various auxiliary compounds, such as thermal stabilizers, antioxidants, plasticizers, dyes, matting agents, antistatic agents, impact modifiers, biocides, and processing aids such as lubricants, slip agents, antiblock agents, and denest aids. The total amount of these types of further additives is preferably not more than 10 wt.-%, more preferably not more than 5 wt.-%, based on the total weight of the polymeric material.

According to one or more preferred embodiments, step ii2) of the method comprises:
ii21) Feeding the polymeric material into the 3D printer,
ii22) Heating the polymeric material to provide a melted polymeric material,
ii23) Depositing the melted polymeric material by using a printer extrusion head of the 3D printer in a selected pattern in accordance with the digital model of the roof drain element to form the at least one tubular section onto the first major surface of the baseplate.

The movements of the printer extrusion head in step ii23) are controlled according to control data calculated from the digital model of the roof drain element. The digital model of the roof drain element is preferably first converted to a STL file to tessellate the 3D shape of the article and to slice it into digital layers. The STL file is transferred to the 3D printer using custom machine software. A control system, such as a computer-aided manufacturing (CAM) software package, can be used to generate the control data based on the STL file. The control system can be part of the 3D printer, or it can be part of a separate data processing unit, for example a computer system.

The roof drain element obtained by using the method as discussed above is a monolithic part. With monolithic parts, there is no risk of leakage caused by weld lines or the like. Thus, a monolithic part is much more reliable than a part consisting of several interconnected sections.

A further subject of the invention is use of the roof drain element obtained by using the method according to any one of previous claims for sealing of rainwater outlets in flat roof structures, preferably for sealing of rainwater outlets in roof decks and/or parapets.

Still another subject of the present invention is a method for installing a roof drainage comprising steps of:
I) Providing a roof drain element obtained by using the method according to the present invention and
II) Adhering the roof drain element to a surface a roof substrate via the upper and/or lower major surface of the baseplate, preferably by using heat-welding.

### Examples

### Manufacture of granules for 3D printing

The granules suitable for use in 3D printing process were produced according to the following process.

A portion of the raw materials of the polymeric material for the roof drain elements were premixed in a tumbler mixer and then fed to a ZSK laboratory twin-extruder (L/D 44) via a gravimetric dosing scale. Another portion of the raw materials was fed directly via gravimetric dosing trolleys into the laboratory extruder. The raw materials were mixed, dispersed, homogenized and discharged via the holes of perforated extrusion nozzles. The extruded strands were cooled using a water bath and cut into granules with suitable dimensions. The granules were then dried in an oven to remove the residual moisture.

The composition of the prepared granules comprised:
- 25.6 wt.-% of Eltex^{®} P KS 359,
- 31.9 wt.-% of Vistamaxx^{®} 6202,
- 6.4 wt.-% of Vistamaxx^{®} 6102,
- 3.8 wt.-% of titanium dioxide; TiO₂ content > 92.5 wt.-% (DIN EN ISO 591),
- 0.1 wt.-% of a mixture of inorganic pigments,
- 0.5 wt.-% of a thermal stabilizer; blend of phosphit stabilizer and steric hindered phenolic stabilizer,
- 0.5 wt.-% of an oligomeric hindered amine light stabilizer,
- 0.6 wt.-% of a hindered amine light stabilizer, and
- 30.7 wt.-% of aluminum trihydroxide (ATH).

### Production of roof drain elements with 3D printing

Exemplary roof drain elements were manufactured by printing one, two, or three hollow tubular extensions to a surface of a baseplate using a Yizumi Space A fused particle fabrication (FPF) 3D printer. The granules prepared as described above were used as a feed material for the 3D printer, which was operated using the settings shown in Table 1.

SIMONA^{®} PP light grey 9310 (From Simona AG, Germany) having a thickness of 4 mm and size of DIN A3 was used as the baseplate.

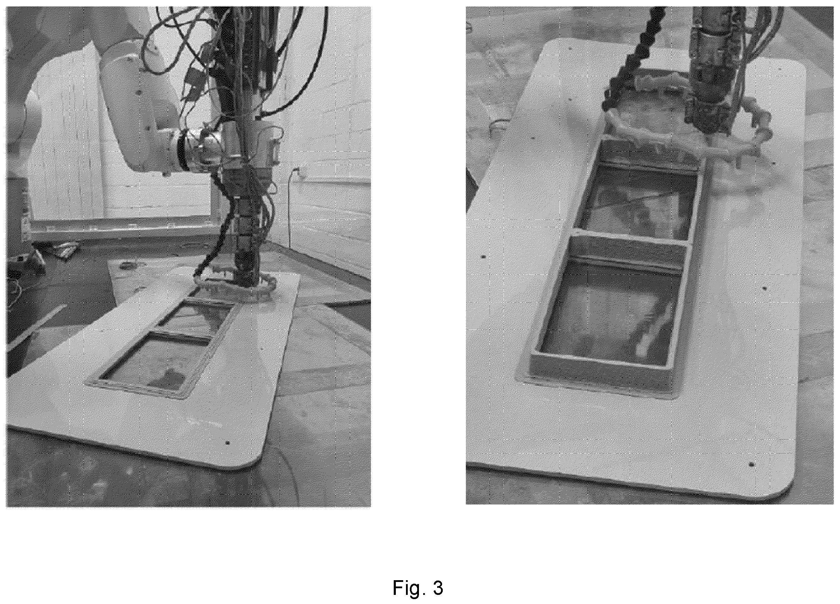

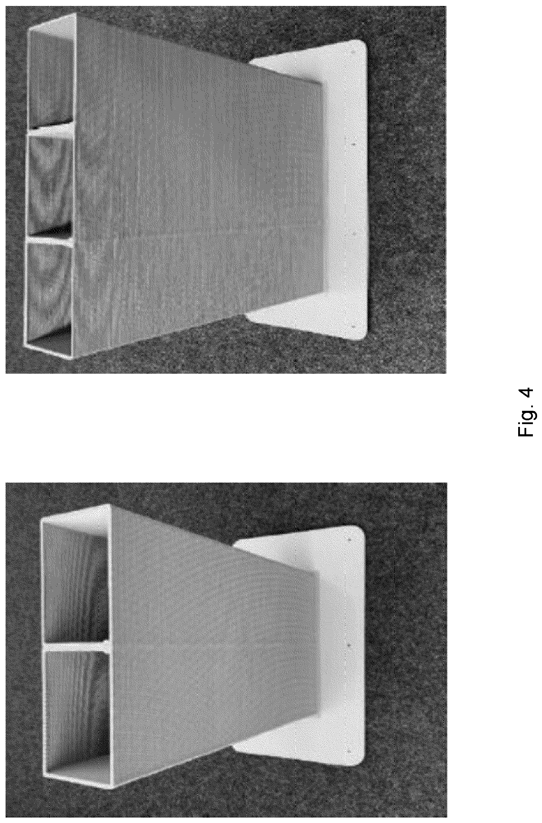

Photos of 3D printed roof drain elements during and after the 3D printing process are presented in Figures 3 and 4.

**Table 1**

| **Simplify 3D** | **Serenity File** | **Kuka Pad** | **Extruder** | | | | | | | |
|---|---|---|---|---|---|---|---|---|---|---|
| **Primary layer height [mm]** | **Printing speed [m/s]** | **Software speed [%]** | **Nozzle size [mm]** | **Extruder speed [rpm]** | **Feed zone [°C]** | **Heating zone 3 [°C]** | **Heating zone 2 [°C]** | **Heating zone 1 [°C]** | **Nozzle temp. [°C]** | **Cooling power [%]** |
| **0.9** | 0.03 | 100 | 2 | 55 | 80 | 170 | 190 | 190 | 190 | 60 |

## Claims

1. A method for producing a roof drain element comprising steps of:
i) Providing a digital model of a roof drain element (1) and
ii) Based on the digital model, producing a roof drain element (1) by additive manufacturing,
wherein the roof drain element (1) comprises a baseplate (2) having upper and lower major surfaces (21, 22) and at least one hollow tubular section (3) extending outwardly from the upper major surface (21) of the baseplate (2),
and wherein step ii) comprises:
ii1) Providing a baseplate (2) and
ii2) Producing tubular section(s) (3) to the upper major surface (21) of the baseplate (2) by using a 3D printer, preferably a fused filament fabrication or a fused particle fabrication printer.

2. The method according to claim 1, wherein the baseplate (2) has a thickness of 0.5 - 10 mm, preferably 2.5 - 7.5 mm.

3. The method according to claim 1 or 2, wherein the at least one hollow tubular section (3) has first and second end openings and a fluid channel extending along the longitudinal direction of the hollow tubular section (3).

4. The method according to claim 3, wherein the fluid channel of each hollow tubular section (3) extends though the baseplate (2).

5. The method according to any one of previous claims, wherein the at least one hollow tubular section (3) has a circular or rectangular cross-section.

6. The method according to any one of previous claims, wherein the roof drain element comprises at least two hollow tubular sections (31, 32) having a rectangular cross-section, wherein the adjacent hollow tubular sections are connected to each other through a common side wall (4).

7. The method according to any one of previous claims, wherein the at least one hollow tubular section (3) has a wall thickness of 0.25 - 10 mm, preferably 1.5 - 7.5 mm.

8. The method according to any one of previous claims, wherein the baseplate (2) and/or the at least one hollow tubular section (3) is/are composed of a polymeric material comprising:
a) At least 35 wt.-%, preferably at least 45 wt.-%, of at least one polymer P, preferably selected from polyvinylchloride, polyolefins, halogenated polyolefin, ethylene vinyl acetate copolymer, rubbers, and ketone ethyl esters and
b) At least 0.5 wt.-%, preferable at least 1.5 wt.-%, of at least one inorganic filler F, all proportions being based on the total weight of the polymeric material.

9. The method according to claim 8, wherein the at least one polymer P is selected from polyvinylchloride, polypropylene, propylene copolymers, ethylene propylene diene monomer, and ketone ethyl ester.

10. The method according to claim 8 or 9, wherein the at least one inorganic filler F has a median particle size dso in the range of 0.1 - 50 µm, preferably 0.25 - 35 µm.

11. The method according to any one of claims 8-10, wherein the at least one inorganic filler **F** comprises calcium carbonate.

12. The method according to claim 11, wherein the amount of the calcium carbonate constitutes at least at least 15 wt.-%, preferably at least 35 wt.-%, of the total weight of the at least one inorganic filler **F**.

13. Method according to any one of claims 8-12, wherein the polymeric material further comprises at least one flame retardant **FR.**

14. Use of the roof drain element obtained by using the method according to any one of previous claims for sealing of rainwater outlets in flat roof structures.

15. Method for installing a roof drainage comprising steps of:
I) Providing a roof drain element obtained by using the method according to any one of claims 1-13 and
II) Adhering the roof drain element to a surface a roof substrate via the upper and/or lower major surface of the baseplate, preferably by using heat-welding means.
